# EUROPEAN PATENT APPLICATION

(11) **EP 4 765 092 A1**
(43) Date of publication of application: **24.06.2026**
(21) Application number: 25224965.1
(22) Date of filing: 18.12.2025
(51) Int. Cl.: G09G 5/00, G06F 3/147, G09G 3/00, G09G 5/02, G09G 5/377

(54) **FIXED PHOTON-TO-PHOTON PROGRAMMABLE DISPLAY PIPELINE**

(30) Priority: 23.12.2024 US 202463738101 P; 11.12.2025 US 202519416543
(71) Applicant: Apple Inc., Cupertino, CA 95014 (US)
(72) Inventor: MIRHOSSEINI, Seyedkoosha, Cupertino, 95014 (US); MCILREE, James C., Cupertino, 95014 (US); MCCOMBE, James A., Cupertino, 95014 (US); PILLANS, Luke A., Cupertino, 95014 (US); BEGEMAN, Nathaniel C., Cupertino, 95014 (US); FORTIN-DESCHENES, Simon, Cupertino, 95014 (US); ZHANG, Yanli, Cupertino, 95014 (US)
(74) Representative: COPA Copenhagen Patents

(57) **Abstract**

Various implementations disclosed herein include devices, systems, and methods that enable pass-through effects via use of a programmable element (e.g., GPU) in a captured image-rendered content combination pipeline. This may involve, in a captured image-rendered content combination pipeline in which captured image data is processed (e.g., modified and combined with rendered content) in stages (i.e., processing less than an entire frame at once) that must start/end according to timing constraints in order to ensure timely display (i.e., live pass-through via beam chasing), a programable block implemented between the ISP (e.g., pass-through source) and fixed display pipe hardware that can apply the effects to the pass-through video.

## Description

### TECHNICAL FIELD

The present disclosure generally relates to systems, methods, and devices that provide extended reality (XR) views, blending virtual content with pass-through video content on electronic devices such as head-mounted devices (HMDs).

### BACKGROUND

Pass-through video provides live views based on images captured via one or more of a device's cameras. Devices such as HMDs may provide pass-through video that enables a user to "see through" a device's displays to observe a view based on the physical surroundings. Such pass-through video may involve cameras visually capturing images of a physical environment to provide a "live feed" using one or more processes that correct perspective and reduce distortion. Pass-through devices may also provide XR experiences, combining (e.g., blending) rendered virtual content with pass-through video. Existing pass-through devices may be limited with respect to the programmable effects that may be implemented within their display pipelines.

### SUMMARY

Various implementations disclosed herein include devices, systems, and methods that enable pass-through effects via use of a programmable element (e.g., GPU) in a pipeline that combined captured image with rendered virtual content. More specifically, in a captured image-rendered content combination pipeline in which captured image data is processed (e.g., modified and combined with rendered content) in stages (i.e., processing less than an entire frame at once) that must start/end according to timing constraints in order to ensure timely display (i.e., live pass-through via beam chasing), a programmable block is implemented between the ISP (pass-through source) and fixed display pipe hardware. This programmable block is configured to apply the effects to the pass-through video.

In some implementations, an electronic device performs a method (e.g., via one or more processors). The method performs one or more steps or processes. In some implementations, the method involves obtaining image data comprising frames of images sequentially captured by an image capture device on the electronic device in a physical environment. The method involves producing blended frames by sequentially processing segments of the frames via a programmable element (e.g., GPU or other element in which a non-hardware-fixed instruction set may be executed). Image frames may be broken up into such smaller segments to facilitate speed (e.g., reducing the time from image capture to display) and thus each of the segments processed by the programmable element may include less than an entire frame of the frames. The processing comprises performing one or more visual effects on the segments (e.g., by executing instructions that are not fixed in hardware) and blending the segments with rendered content. The segments may be modified with the one or more visual effects (e.g., colorization, modification to add (e.g., adding a note as part of a wall), modification to delete (e.g., deleting a window by replacing it with wall content), add blur, define edges, etc.). The segments may be processed, e.g., blended with the rendered content and/or modified, in stages that are performed (e.g., start and end) according to timing constraints associated with display of individual blended frames. The method involves displaying the blended frames, including the effects.

Some implementations involve a method that enables pass-through effects via a shared programmable element (e.g., GPU), where time-splitting of the shared programmable element is managed in a way (e.g., using a time-sharing policy) that prioritizes the performance of the effects and/or blending over other processes to ensure satisfaction of display-based timing constraints. In some implementations, an electronic device performs a method (e.g., via one or more processors). The method involves performing one or more steps or processes. In some implementations, the method involves obtaining image data comprising frames of images sequentially captured by an image capture device on the electronic device in a physical environment. The method may involve producing blended frames by sequentially processing segments of the frames via a shared programable element comprising a non-fixed instruction set, wherein the shared programmable element is shared amongst multiple processes according to a time-sharing policy. The multiple processes may comprise performing one or more visual effects on the segments, blending the segments with rendered content, and one or more additional processes (e.g., lighting adjustment, flicker suppression, rendering of game or application graphics, etc.). The time-sharing configuration may control use of the programable element by the multiple processes to ensure performance of the one or more visual effects and/or blending in accordance with timing constraints associated with display of individual blended frames. The method involves displaying the blended frames, including the effects.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of aspects of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates an exemplary electronic device operating in a physical environment in accordance with some implementations.
Figure 2 illustrates a view of an XR environment provided by the device of Figure 1, in accordance with some implementations.
Figure 3 is a block diagram illustrating an exemplary captured image-rendered content combination pipeline in which pass-through effects are enabled via use of a programmable element in accordance with some implementations.
Figure 4 is a block diagram illustrating another exemplary captured image-rendered content combination pipeline in which pass-through effects are enabled via use of a programmable element in accordance with some implementations.
Figure 5 is a block diagram illustrating another exemplary captured image-rendered content combination pipeline in which pass-through effects are enabled via use of a programmable element in accordance with some implementations.
Figure 6 is a flowchart illustrating an exemplary method of providing a pass-through effect via use of a programmable element in a captured image-rendered content combination pipeline, in accordance with some implementations.
Figure 7 is a flowchart illustrating another exemplary method of providing a pass-through effect via use of a programmable element in a captured image-rendered content combination pipeline, in accordance with some implementations.
Figure 8 is a block diagram of an electronic device of in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

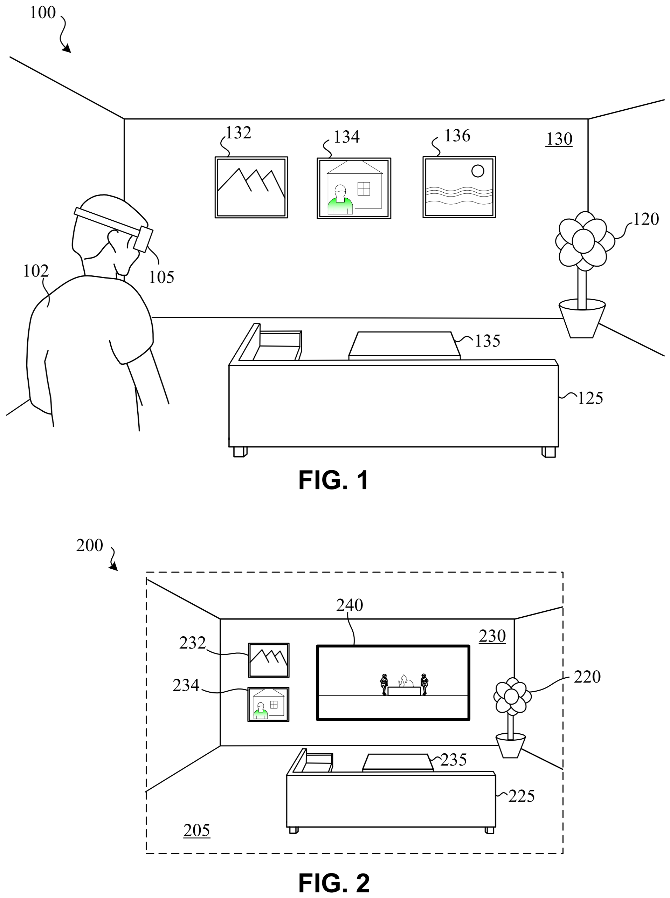

**Figure 1** illustrates an exemplary electronic device 105 operating in a physical environment 100. In the example of Figure 1, the physical environment 100 is a room with a plant 120, a sofa 125, a first wall-hung picture, a second wall-hung picture 134, a third wall-hung picture 136, and a table 135. The electronic device 105 may include one or more cameras, microphones, depth sensors, or other sensors that can be used to provide pass-through video (e.g., to provide XR environment views) and/or capture information about and evaluate the physical environment 100 and the objects within it, as well as information about the user 102 of electronic device 105. The information about the physical environment 100 and/or user 102 may be used to provide visual and audio content and/or to identify the current location of the physical environment 100 and/or the location of the user within the physical environment 100.

In some implementations, views of an XR environment may be provided to one or more participants (e.g., user 102 via the electronic device 105 and/or other participants not shown via other electronic devices not shown). Such an XR environment may be a 3D environment that is generated based on camera images and/or depth camera images of the physical environment 100. Such an XR environment may include virtual content (e.g., one or more virtual content items) that is positioned at one or more 3D locations relative to a 3D coordinate system associated with the XR environment, which may correspond to a 3D coordinate system of the physical environment 100. In one example, an XR environment includes a virtual content item displayed within an entirely virtual surrounding environment. In one example, an XR environment includes a virtual content item displayed within an entirely real surrounding environment (e.g., combined with pass-through video provided by the device). In one example, an XR environment includes a virtual content item displayed within a surrounding environment that includes both real and other virtual elements. In one example, an XR environment includes modifications to the pass-through video of the real physical environment. In views of an XR environment, the appearance of rendered virtual content and/or the surrounding environment may be configured or modified to provide effects and/or to otherwise enhance the view or experience.

In some implementations, an XR environment is presented using pass-through video that depicts a physical environment (e.g., physical environment 100). Pass-through video, for example, may be provided based on receiving and presenting images from an image sensor (e.g., outward-facing cameras) of a device (e.g., device 105). In some implementations, virtual content item is presented with the pass-through video content and one or more effects are generated to change the appearance of a virtual content item and/or the pass-through video of the physical environment 100.

**Figure 2** illustrates a view 200 of an exemplary XR environment provided by a device (e.g., device 105 of Figure 1). The view 200 of the XR environment includes (live) pass-through video 205 of a physical environment (e.g., physical environment 100 of Figure 1) and a virtual content item 240 (e.g., a Movie, TV show, etc.) positioned at a 3D location within the XR environment.

The pass-through video 205 is also modified to provide visual effects. The pass-through video 205 includes a depiction 220 of the flower 120, a depiction 225 of the sofa 125, a depiction 230 of wall 130, a depiction 232 of the first wall-hung picture 132, a depiction 234 of the second wall-hung picture 234, and a depiction 235 of the table 135, etc. Some or all of these depictions may be modified by the effects, e.g., by changing the pixels in the pass-through video 205 images.

In this example, the pass-through video 205 is modified programmatically to reposition the depiction 232 of the first wall-hung picture 132, i.e., the frame pixels of the pass-through video 205 corresponding to the first wall-hung picture 132 are shifted to the left (replacing the pass-through content that would otherwise be there). Similarly, the pass-through video 205 is modified programmatically to reposition the depiction 234 of the second wall-hung picture 134, i.e., the frame pixels of the pass-through video 205 corresponding to the second wall-hung picture 134 are shifted to the left and down (replacing the pass-through content that would otherwise be there). The frame pixels corresponding to the third wall-hung picture 136 are removed entirely, i.e., replaced with pixels corresponding to virtual content item 240 and the depiction 230 of the wall 130. In this example, these modifications may be based on programmatic instructions that identify when a virtual content item such as virtual content item 240 will be positioned on a wall and occlude (or partially occlude) wall-hung elements and instructions that specify pass-through modifications to move such occluded items to positions that are not occluded (i.e., as in the cases of depictions 232 and 234) or to remove such occluded items (i.e., as in the case of a depiction (not shown) of the third wall-hung picture 136 being removed).

The virtual content item 240 and modifications to the pass-through video 205 may be fixed over time (e.g., from frame-to-frame) to provide consistency in views of the XR environment across multiple frames. Thus, as the user moves the device 105 around the physical environment 100 to view the XR environment from different viewpoints, the virtual content item 240 may appear to remain at a fixed position, e.g., being world-locked to appear to remain at a fixed position on the wall of the physical environment 100. Similarly, the modifications to the pass-through may be applied consistently so that the depiction 232 of the first wall-hung picture 132 and the depiction 234 of the second wall-hung picture 134 remain in fixed positions on the depiction 230 of the wall 130.

A processor may be configured to process frames of pass-through video at a relatively high frames per second (FPS) rate such as, e.g., a frame rate greater than 60 FPS. In some implementations, one or more processing components retrieve each frame or frame segment of the pass-through video from the outward-facing cameras and alters each pass-through frame or frame segment according to programmatic instructions (e.g., instructions to add, remove, relocate, enhance, or otherwise change the appearance of real-world content) to achieve one or more effects. The process may include an alpha blending process for combining each of the frames of the pass-through video (e.g., background content) with the frame-specific virtual content. In some implementations, alpha-blend values associated with the pass-through video in areas corresponding to a virtual content item and/or surrounding areas may be adjusted. Blend and pass-through modification may be performed by a single element of a display pipeline or by multiple elements, e.g., sequentially.

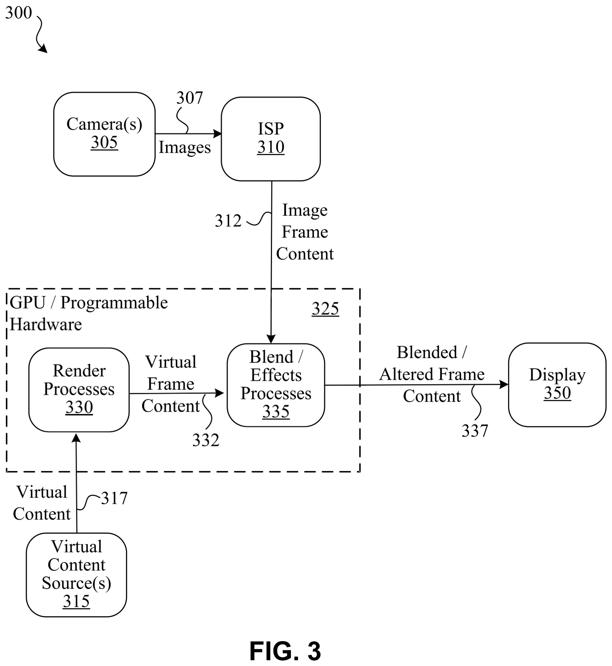

**Figure** 3 illustrates a process 300 including an exemplary pipeline in which pass-through effects are enabled via use of a programmable element. The pipeline may combine captured image content with rendered content. In this example, the exemplary captured image-rendered content combination pipeline includes render processes 330 and blend/effects processes 335 that are implemented via one or more graphics processing unit(s) / programmable hardware 325 (e.g., execution of code via such hardware).

In this example of Figure 3, one or more cameras 305 provide images 307 to an image signal processor (ISP) 310. The ISP 310 may perform one or more processes to control the capture of and/or alter the appearance of the content depicted in the images 307 (e.g., calibrating and modifying parameters such as white balance, exposure control, auto-focus, noise reduction, adjusting sharpness, etc.). Image frame content 312 is provided to the blend / effects processes 335, which in this example is a combined unit (e.g., set of instructions) executed within the GPU/programmable hardware 325.

One or more virtual content sources 315 provide virtual content 317 (e.g., 2D or 3D objects to be rendered so as to appear at 3D positions within the 3D environment depicted by the image frame content 312). The render processes 330 may determine virtual frame content 332 based on the virtual content 317. Such virtual frame content 332 may be produced by rendering a 2D view of the virtual content from a particular 3D viewpoint. For example, the image frame content 312 may correspond to a particular viewpoint within the 3D physical environment depicted therein and rendering the view of the virtual content 317 may involve determining 3D positions for the virtual content within that 3D environment and then rendering a view of the virtual content 317 from the current camera viewpoint within that 3D environment. The render processes 330 may produce virtual frame content 332 that is provided to blend / effects processes 335.

Blend / effects processes 335 combine the virtual frame content 332 with the image frame content 312 to produce combined views, i.e., views that depict the virtual content 317 at appropriate 3D positions within the 3D environment depicted in the image frame content 312. Blend / effects processes 335 may also execute programmatic instructions to apply modification or other effects to the image-frame content 312 (e.g., pass-through video) and/or to the virtual frame content 332. The modifications or other effects may be applied before or after combining the image frame content 312 with the virtual frame content 332. Blended/altered frame content 337 is provided for display via display 350.

In some implementations, one or more processes used to render virtual content (e.g., render processes 330), blend rendered virtual content with pass-through frames (blend/effects processes 335), and/or alter the appearance of rendered virtual content and/or pass-through video content (blend/effects processes 335) are performed. One or more of these functions or other features of the display pipeline could be performed via fixed-function hardware that only executes fixed instructions, e.g., via an Application-Specific Integrated Circuit (ASIC) that is designed for a particular task. However, in accordance with implementations disclosed herein, One or more of these functions or other features of the display pipeline are performed using one or more processors (e.g., GPU(s)/programmable hardware 325) capable of executing programmatic instructions to achieve such functions. Some or all of these functions may be performed via a processor (e.g., a GPU) capable of executing programmatic instructions to achieve various advantages, e.g., enabling pass-through modifications that would not otherwise be possible.

Some implementations enable direct manipulation of pass-through video (e.g., non-photorealistic rendering, blur, stylization, distortion, displacement (e.g., move a depiction of a physical object 15 pixels to the right), depth-aware matting, matting optimized per surface type, etc.). Some implementations use and/or blend additional sensor data streams (e.g., data from other cameras on the device or other devices in the environment). Some implementations enable applications to program pass-through effects and/or otherwise control the overall visual appearance of pass-through video programmatically. In one example, an application may programmatically replace a portion of a user's wall with a Van Gogh painting by operating on pass-through pixels. In another example, a VR stained glass window (e.g., through which real-world content is tinted in color) may be provided by providing instructions that re-color, blur, distort, and/or otherwise change pass-through colors. In another example, a physical wall may be removed and replaced with image data from a camera in the room behind the wall, providing a "superhuman" / "x-ray" vision effect.

Visual effects may take various forms. Some implementations provide pass-through space augmentations, non-photo realistic adjustments, accessibility effects, etc. Visual effects may add to pass-through, e.g., adding a note to a wall where the note looks like it is a natural part of the wall based on computational analysis of the wall's appearance. Visual effects may provide content to be added that matches an appearance of real-world elements depicted in other portions of the pass-through. Visual effects may be provided, e.g., via an application, based on conditions, contingencies, user state, or other contextual information that is recognized programmatically. Effects can provide artifact mitigation and/or compensation, e.g., compensating for visual artifacts in camera image data. Effects may involve controlling hardware, e.g., to reduce the sources and/or appearance of flicker. Effects may provide blending or tone mapping. Effects may involve effects that are implemented via rendering directly to a display backend, e.g., render directly to warp / group space (as explained below) or otherwise integrate into a pass-through feed.

Implementations disclosed herein may be configured to enable different types of visual effects. A first exemplary category of such effects (e.g., referred to herein as "category 1" effects) may include effects, such as pixel tinting or color change, that do not require information about a prior frame or information about far-away pixels in the current frame, e.g., information about pixels more than a threshold number of pixels away or pixels associated with a prior-processed segment of a current frame. A second exemplary category of such effects (e.g., referred to herein as "category 2" effects) may include effects, such as displacements, refraction effects, etc., that may require information about prior frames or information about far-away pixels, e.g., pixels more than a threshold number of pixels away or pixels associated with a prior-processed segment of a current frame. The architecture may be customized according to the requirements of the effects to be enabled. For example, enabling category 2 effects may require using additional components to store information (regarding prior frames or far-away portions of a current frame) in memory.

Some implementations disclosed herein enable event-triggered effects. For example, alterations to pass-through and/or rendered virtual content may be triggered programmatically based on detecting user input or sensor data events, e.g., triggering events based on observing events using sensor data obtained via cameras or other sensors on the device.

Some implementations disclosed herein enable same-frame effects. For example, this may involve using an upstream model configured to observe a pass-through video stream and provide information (e.g., coefficients, instructions, etc.) for downstream late-stage application, e.g., enabling hands matting. In some implementations, same frame effects involve a pipeline that involves camera → ISP → GPU → [optional fixed function, e.g., blend] → display. Such a process may occur during a brief time span, e.g., 11 ms, and may be pipelined, e.g., partial frames processed sequentially as they come from the camera. In some scenarios, it is possible that the ISP process is complete with a substantial amount of a captured frame before the GPU is complete with the first/early parts of the frame. In parallel with the ISP → GPU path, the process may pipe camera frame segments for processing (e.g., via a neural engine/compute). A neural engine may run a process/algorithm and generate parameters for either: (a) optional fixed function between the GPU and display; or (b) the GPU to use at the end of its program. Such parameters may be used to identify (e.g., based on the pixel values at that stage of the pipeline) which pixels should be marked, e.g., marked as "hand" pixels or non-hand pixels. The above may apply to any same-frame algorithms (e.g., for occlusion between real and virtual objects, XR adjustments like changing a physical environment wall into a virtual calendar, etc.).

Some implementations provide or utilize deferred rendering. Rather than a GPU rendering virtual content pixels, this may involve rendering using descriptive geometric metadata (e.g., into a G-buffer) specifying characteristics (e.g., diffuse color, reflectivity, normals, albedo, etc.). Pixels may be rendered by the display pipeline applying lighting effects to both pass-through and virtual content. Another example involves rendering improvements (e.g., sub-pixel aware text rendering). Another example, involves camera mitigations (e.g., addressing ghosting, glass glare, flicker, etc.).

In some implementations, a single system on a chip (SOC) provides the display pipeline.

### Timing Requirements Examples

Implementing one or more processes to render virtual content (e.g., render processes 330), blend rendered virtual content with pass-through frames (blend/effects processes 335), and/or alter the appearance of rendered virtual content and/or pass-through video content (blend/effects processes 335) may be performed via a processor capable of executing programmatic instructions (e.g., a GPU). Such processes may be configured to avoid various issues, e.g., timing issues, quality issues, etc. For example, providing pass-through-video may require satisfying timing requirements, e.g., ensuring that each frame or frame segment is fully processed in time for display. Using fixed-function hardware to blend rendered virtual content with pass-through video may facilitate satisfying such timing requirements. However, such a pipeline may be inflexible with respect to implementing programmatic effects. Some implementations provide more flexibility with respect to implementing programmatic effects using a processor (e.g., a GPU) capable of executing programmatic instructions to blend rendered virtual content with pass-through frames and/or alter the appearance of rendered virtual content and/or pass-through video content. Since programmatic instructions are by their nature not fixed, the time required for such processes may be uncertain prior to execution. Additional processes (e.g., safeguards and/or fallbacks) may be used to account for such uncertainty, i.e., the possibility that the processes will take more time than is available to meet display timing requirements. Such additional processes (e.g., safeguards and/or fallbacks) may be configured to provide a display process that is both flexible with respect to programmatic blending and effects, while also compliant with respect to display timing and/or other requirements. XR views may be provided with effects not previously possible, while also ensuring compliance with "live" pass-through timing requirements.

Some implementations provide a fixed photon-to-photon programmable display pipeline, i.e., a pipeline configured to ensure satisfying a fixed photon-to-photon latency requirement. Some implementations introduce flexible compute at various stages in a camera-to-display pipeline, while preserving fixed photon to photon latency. Some implementations provide pass-through beam chasing (i.e., compliance with timing requirements), store one or more prior completed frames, and/or provide hardware late stage reprojection of those past frames. Each new compute in the pipeline may have access to a current portion of a current frame and one or more reprojected (e.g., to account for device movement) prior frames.

Some implementations provide a computer architecture having a programmable element that enables pass-through in a beam chasing-based capture-image-rendered content combination pipeline. In a captured image-rendered content combination pipeline in which captured image data is processed (e.g., modified and combined with rendered content) in stages (i.e., processing less than an entire frame) that must start/end according to timing constraints in order to ensure timely display (i.e., live pass-through via beam chasing), a programable block is implemented between the ISP (pass-through) and fixed display pipe hardware that can apply effects to the pass-through.

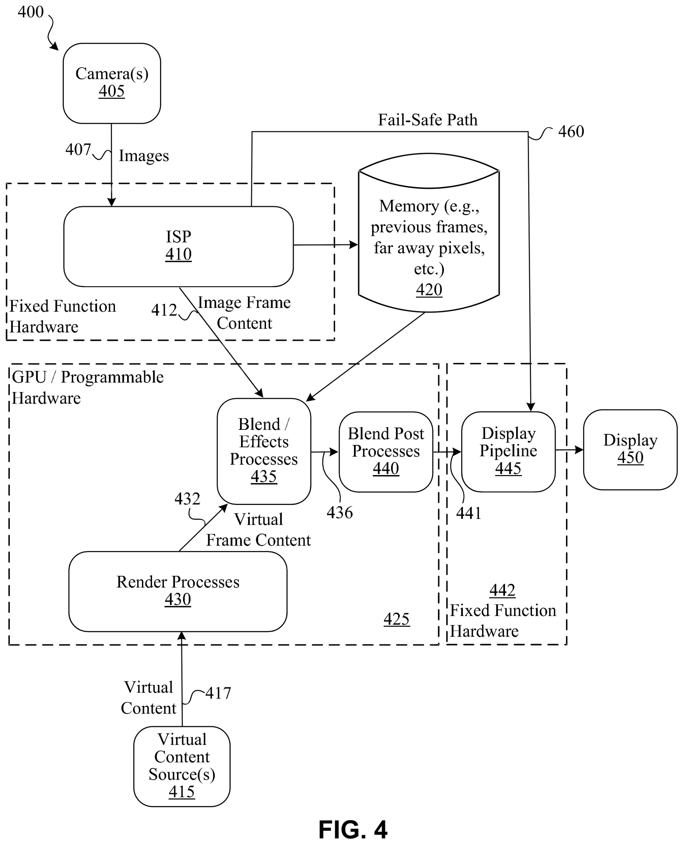

**Figure** 4 illustrates a process 400 including an exemplary pipeline in which pass-through effects are enabled via use of a programmable element. The pipeline may combine captured image content with rendered content. In this example, the exemplary captured image-rendered content combination pipeline includes render processes 430, blend / effects processes 435, and post blend processes 440 that are implemented via a graphics processing unit / programmable hardware 425 (e.g., execution of code via such hardware).

In this example of Figure 4, one or more cameras 405 provide images 407 to an ISP 410. The ISP 410 may perform one or more processes to control the capture of and/or alter the appearance of content in the images 407 (e.g., calibrating and modifying parameters such as white balance, exposure control, auto-focus, noise reduction, adjusting sharpness, etc.). Image frame content 412 is provided to the blend / effects processes 435, which in this example is executed within the GPU/programmable hardware 425.

One or more virtual content sources 415 provide virtual content 417 (e.g., 2D or 3D objects to be rendered so as to appear at 3D positions within the 3D environment depicted by the image frame content 412). The render processes 430 may determine virtual frame content 432 based on the virtual content 417. Such virtual frame content 432 may be produced by rendering a 2D view of the virtual content from a particular 3D viewpoint. For example, the image frame content 412 may correspond to a particular viewpoint within the 3D physical environment depicted therein and rendering the view of the virtual content 417 may involve determining 3D positions for the virtual content within that 3D environment and then rendering a view of the virtual content 417 from the current camera viewpoint within that 3D environment. The render processes 430 may produce virtual frame content 432 that is provided to blend / effects processes 435.

Blend /effects processes 435 may execute programmatic instructions to combine the virtual frame content 432 with the image frame content 412 to produce combined frame content 436, i.e., views that depict the virtual content 417 at appropriate 3D positions within the 3D environment depicted in the image frame content 412.

Blend / effects processes 435 may also execute programmatic instructions to apply modification or other effects to the combined frame content 436. The blend / effects processes 435 may utilize information that is retrieved from memory 420 to implement effects. Memory 420 may store information from prior frames or other parts of the current frame (e.g., outputs of the pipeline from prior iterations for prior frames or portions outside the portion of the current frame that is currently being processed). In the case of prior frames, the stored information may be adapted (via information provided via ISP 410) to align with the current frame's viewpoint. Information from memory 420 may facilitate more robust or otherwise improved edge detection, blur, etc. Information from memory 420 may be utilized to implement multi-pass effects. Some implementations are configured to reduce power by reducing or avoiding unnecessary transfer/buffer of image frames, e.g., only storing frames or frame portions when they will be needed.

The output 441 of the post blend processes 440 includes blended frames (or frame portions) with effects applied that are passed through a display pipeline 445 (implemented in fixed function hardware 442) for display at display 450.

The process 400 accounts for scenarios or circumstances in which the blend / effects processes 435 (or other processes implemented via programmable hardware 525) will or are not completed in time to satisfy display timing requirements. In this example, a fail-safe path 460 is provided directly from the ISP 410 to the display pipeline 445, making the image frame content 412 available for display in the event that output from the blend post processes 440 are not timely available for display. Thus, in such occurrences, the image frame content 412 will be displayed, avoiding the display of blank or corrupted content in such circumstances.

Additionally, or alternatively, some implementations disclosed herein utilize restrictions to ensure effects provided using a programmable block do not degrade performance of a beam chasing-based captured image-rendered content combination pipeline. In a captured image-rendered content combination pipeline in which captured image data is processed (e.g., modified and combined with rendered content) in stages that must start/end according to timing constraints, restrictions or other processes may be implemented in order to ensure timely display (i.e., live pass-through via beam chasing). For example, applications may be enabled to specify alterations to pass-through video and/or virtual content programmatically. However, such programs may be inspected and restricted before execution (e.g., to limit the number of instructions and/or amount of processing allowed to be performed). Doing so may avoid or at least reduce the chances of programmable block failure. In another example, time limits and/or other processing restrictions are employed in real time, e.g., during execution, to halt or prevent operations that would violate time constraints. In another example, event-triggered mitigations are employed. In another example, memory budget limitations are employed.

### Foveated / Group Space Processing Examples

This may involve foveated (also referred to as "group") space processing in which the programmable block (e.g., capable of executing code) acts on and/or blends both pass-through and rendered content in a non-rectilinear space (e.g., a foveated/group space). This may involve original (i.e., non-foveated/group) space processing in which pass-through video is altered in its original form (or other form without adjustment for foveation) via the programmable block. Some implementations provide a fallback pipeline that allows pass-through video to be displayed if programmable block fails.

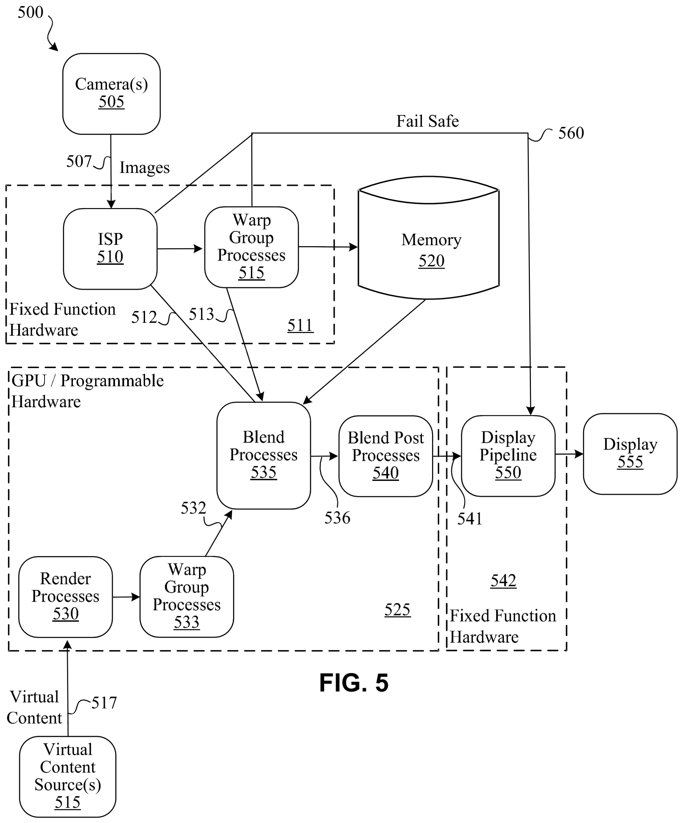

**Figure 5** illustrates a process 500 including an exemplary pipeline in which pass-through effects are enabled via use of a programmable element. The pipeline may combine captured image content with rendered content. In this example, the exemplary captured image-rendered content combination pipeline includes render processes 530, warp group processes 534, blend processes 535, and post blend processes 540 that are implemented via a graphics processing unit / programmable hardware 525 (e.g., execution of code via such hardware).

In this example of Figure 5, one or more cameras 505 provide images 507. These images 507 are processed via fixed function hardware 511, including ISP 510 and warp group processes 515. The ISP 510 may perform one or more processes to control the capture of and/or alter the appearance of content in the images 507 (e.g., calibrating and modifying parameters such as white balance, exposure control, auto-focus, noise reduction, adjusting sharpness, etc.). The warp group processes 515 convert the images from a rectified format (e.g., where pixel density is constant throughout the frames) to a warped or group space format in which pixels density is greater in portions of a frame corresponding the areas around where the user is looking, e.g., foveated regions, than in other regions (e.g., non-foveated regions). Doing so can simplify operations performed on the images (and thus provide improved efficiency) while preserving accuracy/detail in foveated regions. Both unwarped/ungrouped image frame content 512 and/or warped/grouped image frame content 513 may be provided to the blend processes 535, which in this example is executed within the GPU/programmable hardware 525.

One or more virtual content sources 515 provide virtual content 517 (e.g., 2D or 3D objects to be rendered so as to appear at 3D positions within the 3D environment depicted by the image frame content). The render processes 530 may determine virtual frame content 532 based on the virtual content 517. Such virtual frame content 532 may be produced by rendering a 2D view of the virtual content from a particular 3D viewpoint. For example, the unwarped/ungrouped image frame content 512 may correspond to a particular viewpoint within the 3D physical environment depicted therein and rendering the view of the virtual content 517 may involve determining 3D positions for the virtual content within that 3D environment and then rendering a view of the virtual content 517 from the current camera viewpoint within that 3D environment.

The render processes 530 may produce virtual frame content 432 that is provided to warp group processes 533, which in this example is executed within the GPU/programmable hardware 525. The warp group processes 533 convert the images from a rectified format (e.g., where pixel density is constant throughout the frames) to a warped or group space format in which pixels density is greater in portions of a frame corresponding the areas around where the user is looking, e.g., foveated regions, than in other regions (e.g., non-foveated regions). Doing so can simplify operations performed on the images (and thus provide improved efficiency) while preserving accuracy/detail in foveated regions. The warp group processes 515 and warp group processes 533 may be configured to implement using a common output format to facilitate blending by blend / effect processes 535.

Blend / effect processes 535 may also execute programmatic instructions to combine the warped/grouped virtual frame content 532 with the warped/grouped image frame content 513 to produce combined frame content 536, i.e., views that depict the virtual content at appropriate 3D positions within the 3D environment depicted in the image frame content.

Blend / effects processes 535 may also execute programmatic instructions to apply modification or other effects to the combined frame content 536. The blend / effects processes 535 may utilize information that is retrieved from memory 520 to implement effects. Memory 520 may store information from prior frames or other parts of the current frame (e.g., outputs of the pipeline from prior iterations for prior frames or portions outside the portion of the current frame that is currently being processed). In the case of prior frames, the stored information may be adapted (via information provided via ISP 510) to align with the current frame's viewpoint. The blend/effects processes 535 may utilize the unwarped/ungrouped image frame content 512.

The output 541 of the post blend processes 450 includes blended frames (or frame portions) with effects applied that are passed through a display pipeline 550 (implemented in fixed function hardware 542) for display at display 555.

The process 500 accounts for scenarios or circumstances in which the blend/effects processes 535 (or other processes implemented via programmable hardware 525) will or are not completed in time to satisfy display timing requirements. In this example, a fail-safe path 560 is provided directly from the ISP 510 or warp group processes 515 to the display pipeline 550, making the ungrouped image frame content 512 or grouped image frame content 513 available for display in the event that output 541 is not timely available for display. Thus, in such occurrences, the ungrouped image frame content 512 or grouped image frame content 513 will be used to provide the current frame view, avoiding the display of blank or corrupted content in such circumstances.

Some implementations disclosed herein improve upon existing pipeline techniques (e.g., upon techniques that combine virtual content with camera content using fixed hardware implementations). In some existing systems, GPU are not available or configured to enable rendering effects in warp/group space. Conversion to warp/group space may occur only on fixed function hardware, i.e., thus requiring a GPU to render its output in group space. Implementations disclosed herein deliver a warp/group space version of camera images to the GPU for processing, e.g., to apply effects. Blending can additionally occur in warp/group space. In some implementations, a system is configured to alternate in different modes, e.g., a first mode in which effects are applied in warp/group space and a second mode in which effects are applied without converting to warp/group space. The modes may change based on circumstances, e.g., utilizing the second mode when more resources and/or time are available.

In various implementations, a processing component capable of executing software-defined instructions is configured between pass-through video acquisition and display system components. This may be implemented in various ways and in ways that provide efficiency and other benefits. The examples of Figure 3-5 are provided for illustration. Other implementations are envisioned.

In some implementations, a GPU that is used in a display pipeline is shared with other functions. For example, such a GPU may additionally perform operations performed by an application running on the device, e.g., a game engine, etc. Sharing may involve splitting GPU time. Such sharing may be implemented via a process that enforces rules so that display timing requirements are satisfied.

In various implementations the pipeline may additionally include lens correction warp (e.g., lens geometric distortion correction, time warp, late-stage warp, etc.), matting warp / blend, panel correction or compensation (lens, panel, or both), lighting effects, flicker suppression, and/or other processes that otherwise improve the appearance of the content that is displayed.

### Example Methods

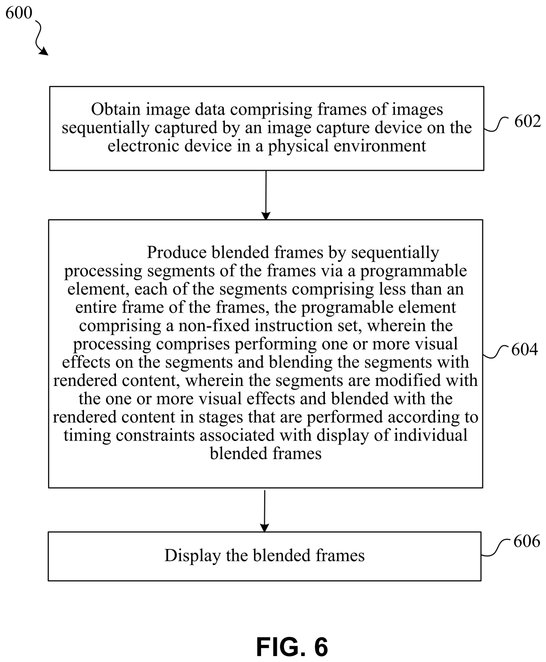

**Figure 6** is a flowchart illustrating an exemplary method 600 of providing a pass-through effect via use of a programmable element in a captured image-rendered content combination pipeline. In some implementations, the method 600 is performed by a device, such as a mobile device, desktop, laptop, HMD, or server device. In some implementations, the device has a screen for displaying images and/or a screen for viewing stereoscopic images such as a head-mounted display (HMD such as e.g., device 105 of Figure 1). In some implementations, the method 600 is performed by processing logic, including hardware, firmware, software, or a combination thereof. In some implementations, the method 600 is performed by one or more processors executing code.

At block 602, the method 600 involves obtaining image data comprising frames of images sequentially captured by an image capture device on the electronic device in a physical environment.

At block 604, the method 600 involves producing blended frames by sequentially processing segments of the frames via a programmable element (e.g., GPU). Each of the segments comprises less than an entire frame of the frames (e.g., small segments facilitate beam chasing). The programable element comprises a non-fixed instruction set, wherein the processing comprises performing one or more visual effects on the segments and blending the segments with rendered content. The segments are modified with the one or more visual effects and blended with the rendered content in stages that are performed (e.g., start and end) according to timing constraints associated with display of individual blended frames.

At block 604, the method 600 involves displaying the blended frames.

Some implementations utilize warp/group space (i.e., corresponding to foveated and non-foveated regions). For example, the programmable block may act on and/or blend both pass-through & rendered in a non-rectilinear space (e.g., a foveated/group space. In the method 600, the frames may be converted to a non-rectilinear format based on identification of areas of the frames at which a user is looking and the one or more visual effects may be performed via the programable element based on the non-rectilinear format. The frames may be converted to a non-rectilinear format based on identification of areas of the frames at which a user is looking and the blending may be performed via the programable element based on the non-rectilinear format.

Some implementations involve using original space, i.e., not warp/group space, to implement effects on pass-through via a programmable block. In the method 600, the one or more visual effects and/or the blending may be performed via the programable element based on an original, rectilinear format of the frames.

Some implementations provide fallback processes for failure conditions, i.e., providing a fallback pipeline that allows pass-through to be displayed if the programmable block fails. The method 600 may involve: detecting a condition in which the programmable block is unable perform the one or more visual effects or blending in accordance with a timing constraint of the timing constraints; and based on detecting the condition, providing one or more of the frames for display without processing via the programable element.

In some implementation a programmable element is a shared GPU and other processes are selectively discontinued to account for failure conditions, i.e., providing a fallback pipeline that allows pass-through to be displayed if the programmable block fails. In the method 600, the programable element may be a GPU. The GPU may be shared amongst multiple processes including processes for the performing of the visual effects, the blending, and additional processes. Exemplary additionally process may involve providing lighting control/effects, flicker suppression, rendering of game or application graphics, etc. The method 600 may involve: detecting a condition in which the GPU is unable perform the one or more visual effects or blending in accordance with a timing constraint of the timing constraints; and based on detecting the condition, altering the additional processes to enable the GPU to perform the one or more visual effects or blending in accordance with the timing constraint.

Some implementations enable category 1 effects, i.e., effects that do not require prior frames or info of far-away pixels, e.g., changing a pixel color based on pixels more than a threshold number of pixels away or pixels associated with a prior-processed segment of a current frame. In the method 600, performing the one or more visual effects on the segments may involve segment-specific effects in which each effect is based on only information about pixels in a respective segment upon which the respective segment is performed. The one or more visual effects may, for example, involve changing a pixel color, i.e., without reference to the color or state of any other pixel.

Some implementations enable category 2 effects, i.e., effects that require knowledge of prior frames or knowledge of far-away pixels, e.g., displacements using additional components (e.g., prior frame, memory). In the method 600, performing the one or more visual effects may involve multi-segment effects in which an effect for a first segment is based on information about one or more pixels from a second segment of a same frame that is different than the first segment. In one example, the effect involves a displacement of frame content from the second segment to the first segment. Performing the one or more visual effects may involves multi-segment effects in which an effect for a first segment is based on information about one or more pixels from a second segment of a prior frame.

Some implementations enable pass-through effects that are based on event triggered programming, e.g., programmable / GPU/ANE-based processing being triggered based on a camera event. In the method 600, the one or more visual effects may involve at least one visual effect that is triggered based on detection of an event, wherein the event is detected based on assessment of at least one of the frames.

Some implementations enable same-frame effects, e.g., using an upstream model that observes a pass-through stream and provides coefficients for downstream late-stage application (e.g., hands matting). In the method 600, the one or more visual effects may involve at least one visual effect in a current frame is triggered based analysis of a prior segment of the current frame.

In some implementations, the timing constraints of method 600 are based on timing requirements to provide live pass-through at a predetermined frame rate.

In some implementations, in method 600, blending the segments with rendered content provides a view of an XR environment. In some implementations, the electronic device of method 600 is an HMD.

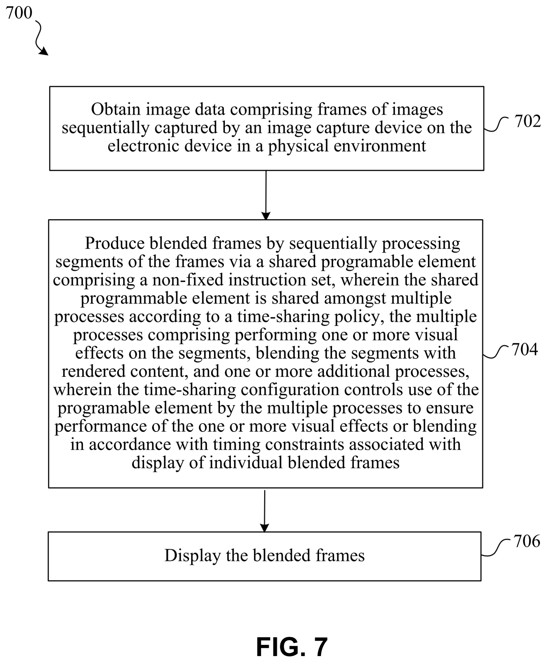

**Figure 7** is a flowchart illustrating another exemplary method of providing a pass-through effect via use of a programmable element in a captured image-rendered content combination pipeline. In some implementations, the method 700 is performed by a device, such as a mobile device, desktop, laptop, HMD, or server device. In some implementations, the device has a screen for displaying images and/or a screen for viewing stereoscopic images such as a head-mounted display (HMD such as e.g., device 105 of Figure 1). In some implementations, the method 700 is performed by processing logic, including hardware, firmware, software, or a combination thereof. In some implementations, the method 700 is performed by one or more processors executing code.

At block 702, the method 700 involves obtaining image data comprising frames of images sequentially captured by an image capture device on the electronic device in a physical environment.

At block 704, the method 700 involves producing blended frames by sequentially processing segments of the frames via a shared programable element comprising a non-fixed instruction set. The shared programmable element is shared amongst multiple processes according to a time-sharing policy. The multiple processes comprise performing one or more visual effects on the segments, blending the segments with rendered content, and one or more additional processes, (e.g., lighting, flicker suppression, rendering of game or application graphics, etc.). The time-sharing configuration controls use of the programable element by the multiple processes to ensure performance of the one or more visual effects or blending in accordance with timing constraints associated with display of individual blended frames.

At block 704, the method 700 involves displaying the blended frames.

In some implementations, details of controlling the shared programmable element are specified via the time-sharing policy. The shared programable element is a shared GPU.

In some implementations, the method 700 involves: detecting a condition in which the shared GPU is unable perform the one or more visual effects or blending in accordance with a timing constraint of the timing constraints; and based on detecting the condition and the time-sharing policy, altering the one or more additional processes to enable the GPU to perform the one or more visual effects or blending in accordance with the timing constraint. Altering the one or more additional process may involve discontinuing processing of the one or more processes via the shared GPU.

Some implementations utilize warp/group space. In the method 700, the frames may be converted to a non-rectilinear format based on identification of areas of the frames at which a user is looking and the one or more visual effects are performed via the programable element based on the non-rectilinear format. The frames may be converted to a non-rectilinear format based on identification of areas of the frames at which a user is looking and the blending is performed via the programable element based on the non-rectilinear format.

Some implementations utilize an original space (e.g., not warp/group space). In the method 700, the one or more visual effects and the blending may be performed via the programable element based on an original, rectilinear format of the frames.

Some implementations provide for fallback processing for failure conditions, i.e., providing a fallback pipeline that allows pass-through to be displayed if the programmable block fails. The method 700 may involve: detecting a condition in which the programmable block is unable perform the one or more visual effects or blending in accordance with a timing constraint of the timing constraints; and based on detecting the condition, providing one or more of the frames for display without processing via the programable element.

Some implementations enable category 1 effects, i.e., effects that do not require prior frames or info of pixels more than a threshold number of pixels away or pixels associated with a prior-processed segment of a current frame, e.g., changing a pixel color. In the method 700, the one or more visual effects on the segments may involve segment-specific effects in which each effect is based on only information about pixels in a respective segment upon which the respective segment is performed. The one or more visual effects may involve changing a pixel color, e.g., without reference to another pixel.

Some implementations enable category 2 effects, e.g., effects that do require prior frames or knowledge of far-away pixels, e.g., displacements using additional components (e.g., prior frame, memory). In the method 700, performing the one or more visual effects may involve multi-segment effects in which an effect for a first segment is based on information about one or more pixels from a second segment of a same frame that is different than the first segment. The effect may involve a displacement of frame content from the second segment to the first segment. Performing the one or more visual effects may involve multi-segment effects in which an effect for a first segment is based on information about one or more pixels from a second segment of a prior frame.

Some implementations enable event-triggered pass-through effect programming, i.e., programmable / GPU/ANE-based processing being based on a camera event. In the method 700, the one or more visual effects comprise at least one visual effect that is triggered based on detection of an event, wherein the event is detected based on assessment of at least one of the frames.

Some implementations enable same-frame effects, i.e., via an upstream model that observes a pass-through stream and provides coefficients for downstream late-stage application (e.g., hands matting). In the method 700, the one or more visual effects may involve at least one visual effect in a current frame is triggered based analysis of a prior segment of the current frame.

In some implementations, the timing constraints of method 700 are based on timing requirements to provide live pass-through at a predetermined frame rate.

In some implementations, in method 700, blending the segments with rendered content provides a view of an XR environment. In some implementations, the electronic device of method 700 is an HMD.

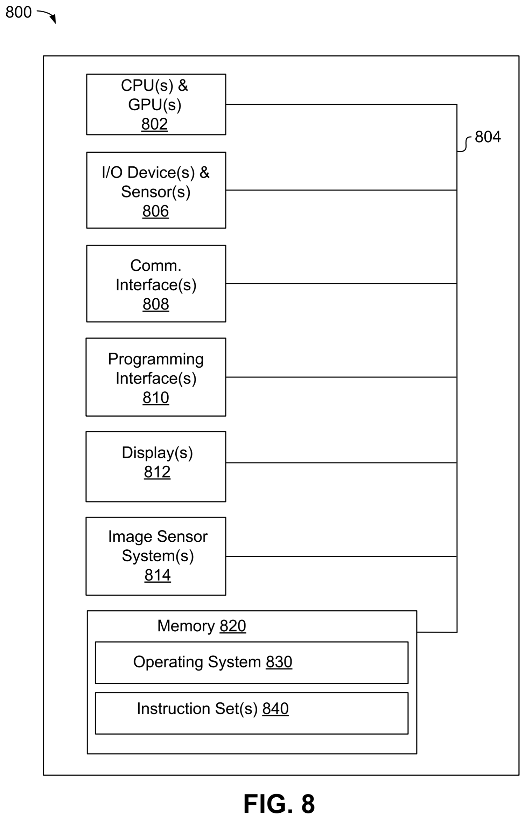

**Figure 8** is a block diagram of an example device 800. Device 800 illustrates an exemplary device configuration for electronic devices 105 of Figure 1. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 800 includes one or more processing units 802 (e.g., microprocessors, ASICs, FPGAs, GPUs, CPUs, processing cores, and/or the like), one or more input/output (I/O) devices and sensors 804, one or more communication interfaces 808 (e.g., USB, FIREWIRE, THUNDERBOLT, IEEE 802.3x, IEEE 802.11x, IEEE 802.14x, GSM, CDMA, TDMA, GPS, IR, BLUETOOTH, ZIGBEE, SPI, I2C, and/or the like type interface), one or more programming (e.g., I/O) interfaces 810, output devices (e.g., one or more displays) 812, one or more interior and/or exterior facing image sensor systems 814, a memory 820, and one or more communication buses 804 for interconnecting these and various other components.

In some implementations, the one or more communication buses 804 include circuitry that interconnects and controls communications between system components. In some implementations, the one or more I/O devices and sensors 806 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), one or more cameras (e.g., inward facing cameras and outward facing cameras of an HMD), one or more infrared sensors, one or more heat map sensors, and/or the like.

In some implementations, the one or more displays 812 are configured to present a view of a physical environment, a graphical environment, an extended reality environment, etc. to the user. In some implementations, the one or more displays 812 are configured to present content (determined based on a determined user/object location of the user within the physical environment) to the user. In some implementations, the one or more displays 812 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 812 correspond to diffractive, reflective, polarized, holographic, etc. waveguide displays. In one example, the device 800 includes a single display. In another example, the device 800 includes a display for each eye of the user.

In some implementations, the one or more image sensor systems 814 are configured to obtain image data that corresponds to at least a portion of the physical environment 100. For example, the one or more image sensor systems 814 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 814 further include illumination sources that emit light, such as a flash. In various implementations, the one or more image sensor systems 814 further include an on-camera image signal processor (ISP) configured to execute a plurality of processing operations on the image data.

In some implementations, sensor data may be obtained by device(s) (e.g., devices 105 and 110 of Figure 1) during a scan of a room of a physical environment. The sensor data may include a 3D point cloud and a sequence of 2D images corresponding to captured views of the room during the scan of the room. In some implementations, the sensor data includes image data (e.g., from an RGB camera), depth data (e.g., a depth image from a depth camera), ambient light sensor data (e.g., from an ambient light sensor), and/or motion data from one or more motion sensors (e.g., accelerometers, gyroscopes, IMU, etc.). In some implementations, the sensor data includes visual inertial odometry (VIO) data determined based on image data. The 3D point cloud may provide semantic information about one or more elements of the room. The 3D point cloud may provide information about the positions and appearance of surface portions within the physical environment. In some implementations, the 3D point cloud is obtained over time, e.g., during a scan of the room, and the 3D point cloud may be updated, and updated versions of the 3D point cloud obtained over time. For example, a 3D representation may be obtained (and analyzed/processed) as it is updated/adjusted over time (e.g., as the user scans a room).

In some implementations, sensor data may be positioning information, some implementations include a VIO to determine equivalent odometry information using sequential camera images (e.g., light intensity image data) and motion data (e.g., acquired from the IMU/motion sensor) to estimate the distance traveled. Alternatively, some implementations of the present disclosure may include a simultaneous localization and mapping (SLAM) system (e.g., position sensors). The SLAM system may include a multidimensional (e.g., 3D) laser scanning and range-measuring system that is GPS independent and that provides real-time simultaneous location and mapping. The SLAM system may generate and manage data for a very accurate point cloud that results from reflections of laser scanning from objects in an environment. Movements of any of the points in the point cloud are accurately tracked over time, so that the SLAM system can maintain precise understanding of its location and orientation as it travels through an environment, using the points in the point cloud as reference points for the location.

In some implementations, the device 800 includes an eye tracking system for detecting eye position and eye movements (e.g., eye gaze detection). For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user. Moreover, the illumination source of the device 800 may emit NIR light to illuminate the eyes of the user and the NIR camera may capture images of the eyes of the user. In some implementations, images captured by the eye tracking system may be analyzed to detect position and movements of the eyes of the user, or to detect other information about the eyes such as pupil dilation or pupil diameter. Moreover, the point of gaze estimated from the eye tracking images may enable gaze-based interaction with content shown on the near-eye display of the device 800.

The memory 820 includes high-speed random-access memory, such as DRAM, SRAM, DDR RAM, or other random-access solid-state memory devices. In some implementations, the memory 820 includes non-volatile memory, such as one or more magnetic disk storage devices, optical disk storage devices, flash memory devices, or other non-volatile solid-state storage devices. The memory 820 optionally includes one or more storage devices remotely located from the one or more processing units 802. The memory 820 includes a non-transitory computer readable storage medium.

In some implementations, the memory 820 or the non-transitory computer readable storage medium of the memory 820 stores an optional operating system 830 and one or more instruction set(s) 840. The operating system 830 includes procedures for handling various basic system services and for performing hardware dependent tasks. In some implementations, the instruction set(s) 840 include executable software defined by binary information stored in the form of electrical charge. In some implementations, the instruction set(s) 840 are software that is executable by the one or more processing units 802 to carry out one or more of the techniques described herein.

The instruction set(s) 840 may include fixed and/or programmable instructions executable via fixed function hardware and/or a programmable component such as a CPU or GPU, or a combination thereof, to perform one or more of the features described herein, e.g., generating virtual content, rendering, warping, blending, effects, performing other aspects of a display pipeline, etc. The instruction set(s) 840 may be embodied in various forms, as hardwired instructions, as a single software executable, multiple software executables, etc.

Although the instruction set(s) 840 are shown as residing on a single device, it should be understood that in other implementations, any combination of the elements may be located in separate computing devices. Moreover, Figure 8 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

Those of ordinary skill in the art will appreciate that well-known systems, methods, components, devices, and circuits have not been described in exhaustive detail so as not to obscure more pertinent aspects of the example implementations described herein. Moreover, other effective aspects and/or variants do not include all of the specific details described herein. Thus, several details are described in order to provide a thorough understanding of the example aspects as shown in the drawings. Moreover, the drawings merely show some example embodiments of the present disclosure and are therefore not to be considered limiting.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, e.g., one or more modules of computer program instructions, encoded on computer storage medium for execution by, or to control the operation of, data processing apparatus. Alternatively, or additionally, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel. The operations described in this specification can be implemented as operations performed by a data processing apparatus on data stored on one or more computer-readable storage devices or received from other sources.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Exemplary embodiments are set out in the following items and articles:

### Items

1. A method comprising:
   at an electronic device:
   obtaining image data comprising frames of images sequentially captured by an image capture device on the electronic device in a physical environment;
   producing blended frames by sequentially processing segments of the frames via a programmable element, each of the segments comprising less than an entire frame of the frames, the programable element comprising a non-fixed instruction set, wherein the processing comprises performing one or more visual effects on the segments and blending the segments with rendered content, wherein the segments are modified with the one or more visual effects and blended with the rendered content in stages that are performed according to timing constraints associated with display of individual blended frames; and
   displaying the blended frames.
2.The method of item 1, wherein the frames are converted to a non-rectilinear format based on identification of areas of the frames at which a user is looking and the one or more visual effects are performed via the programable element based on the non-rectilinear format.
3.The method of any of items 1-2, wherein the frames are converted to a non-rectilinear format based on identification of areas of the frames at which a user is looking and the blending is performed via the programable element based on the non-rectilinear format.
4.The method of any of items 1-3, wherein the one or more visual effects and the blending are performed via the programable element based on an original, rectilinear format of the frames.
5.The method of any of items 1-4, further comprising:
   detecting a condition in which the programmable block is unable perform the one or more visual effects or blending in accordance with a timing constraint of the timing constraints; and
   based on detecting the condition, providing one or more of the frames for display without processing via the programable element.
6. The method of any of items 1-5, wherein the programable element is a graphical processing unit (GPU).
7. The method of item 6, wherein the GPU is shared amongst multiple processes, the multiple processes comprising processes for the performing of the visual effects, the blending, and additional processes.
8. The method of item 7, further comprising:
   detecting a condition in which the GPU is unable perform the one or more visual effects or blending in accordance with a timing constraint of the timing constraints; and
   based on detecting the condition, altering the additional processes to enable the GPU to perform the one or more visual effects or blending in accordance with the timing constraint.
9. The method of any of items 1-8, wherein performing the one or more visual effects on the segments involves segment-specific effects in which each effect is based on only information about pixels in a respective segment upon which the respective segment is performed.
10. The method of item 9, wherein the one or more visual effects comprise changing a pixel color.
11. The method of any of items 1-10, wherein performing the one or more visual effects involves multi-segment effects in which an effect for a first segment is based on information about one or more pixels from a second segment of a same frame that is different than the first segment.
12. The method of item 11, wherein the effect comprises a displacement of frame content from the second segment to the first segment.
13. The method of any of items 1-12, wherein performing the one or more visual effects involves multi-segment effects in which an effect for a first segment is based on information about one or more pixels from a second segment of a prior frame.
14. The method of any of items 1-13, wherein the one or more visual effects comprise at least one visual effect that is triggered based on detection of an event, wherein the event is detected based on assessment of at least one of the frames.
15. The method of any of items 1-14, wherein the one or more visual effects comprise at least one visual effect in a current frame is triggered based analysis of a prior segment of the current frame.
16. The method of any of items 1-15, wherein the timing constraints correspond to providing live pass-through.
17. The method of any of items 1-16, wherein blending the segments with rendered content provides a view of an extended reality (XR) environment.
18. The method of any of items 1-17, wherein the electronic device is a head-mounted device (HMD).
19. A system comprising:
   one or more processors and program instructions that, when executed on the one or more processors, cause the one or more processors to perform operations comprising:
   obtaining image data comprising frames of images sequentially captured by an image capture device on the electronic device in a physical environment;
   producing blended frames by sequentially processing segments of the frames via a programmable element, each of the segments comprising less than an entire frame of the frames, the programable element comprising a non-fixed instruction set, wherein the processing comprises performing one or more visual effects on the segments and blending the segments with rendered content, wherein the segments are modified with the one or more visual effects and blended with the rendered content in stages that are performed according to timing constraints associated with display of individual blended frames; and
   displaying the blended frames.
20. A non-transitory computer-readable storage medium storing program instructions executable via one or more processors to perform the operations comprising:
   obtaining image data comprising frames of images sequentially captured by an image capture device on the electronic device in a physical environment;
   producing blended frames by sequentially processing segments of the frames via a programmable element, each of the segments comprising less than an entire frame of the frames, the programable element comprising a non-fixed instruction set, wherein the processing comprises performing one or more visual effects on the segments and blending the segments with rendered content, wherein the segments are modified with the one or more visual effects and blended with the rendered content in stages that are performed according to timing constraints associated with display of individual blended frames; and
   displaying the blended frames.

### Articles

1. A method comprising:
   at an electronic device:
   obtaining image data comprising frames of images sequentially captured by an image capture device on the electronic device in a physical environment;
   producing blended frames by sequentially processing segments of the frames via a programmable element, each of the segments comprising less than an entire frame of the frames, the programable element comprising a non-fixed instruction set, wherein the processing comprises performing one or more visual effects on the segments and blending the segments with rendered content, wherein the segments are modified with the one or more visual effects and blended with the rendered content in stages that are performed according to timing constraints associated with display of individual blended frames; and
   displaying the blended frames.
2. The method of article 1, wherein the frames are converted to a non-rectilinear format based on identification of areas of the frames at which a user is looking and the one or more visual effects are performed via the programable element based on the non-rectilinear format.
3. The method of any of articles 1-2, wherein the frames are converted to a non-rectilinear format based on identification of areas of the frames at which a user is looking and the blending is performed via the programable element based on the non-rectilinear format.
4. The method of any of articles 1-3, wherein the one or more visual effects and the blending are performed via the programable element based on an original, rectilinear format of the frames.
5. The method of any of articles 1-4 further comprising:
   detecting a condition in which the programmable block is unable perform the one or more visual effects or blending in accordance with a timing constraint of the timing constraints; and
   based on detecting the condition, providing one or more of the frames for display without processing via the programable element.
6. The method of any of articles 1-5, wherein the programable element is a graphical processing unit (GPU).
7. The method of article 6, wherein the GPU is shared amongst multiple processes, the multiple processes comprising processes for the performing of the visual effects, the blending, and additional processes.
8. The method of article 7 further comprising:
   detecting a condition in which the GPU is unable perform the one or more visual effects or blending in accordance with a timing constraint of the timing constraints; and
   based on detecting the condition, altering the additional processes to enable the GPU to perform the one or more visual effects or blending in accordance with the timing constraint.
9. The method of any of articles 1-8, wherein performing the one or more visual effects on the segments involves segment-specific effects in which each effect is based on only information about pixels in a respective segment upon which the respective segment is performed.
10. The method of article 9, wherein the one or more visual effects comprise changing a pixel color.
11. The method of any of articles 1-8, wherein performing the one or more visual effects involves multi-segment effects in which an effect for a first segment is based on information about one or more pixels from a second segment of a same frame that is different than the first segment.
12. The method of article 11, wherein the effect comprises a displacement of frame content from the second segment to the first segment.
13. The method of any of articles 1-8, wherein performing the one or more visual effects involves multi-segment effects in which an effect for a first segment is based on information about one or more pixels from a second segment of a prior frame.
14. The method of any of articles 1-13, wherein the one or more visual effects comprise at least one visual effect that is triggered based on detection of an event, wherein the event is detected based on assessment of at least one of the frames.
15. The method of any of articles 1-14, wherein the one or more visual effects comprise at least one visual effect in a current frame is triggered based analysis of a prior segment of the current frame.
16. The method of any of articles 1-15, wherein the timing constraints correspond to providing live pass-through.
17. The method of any of articles 1-16, wherein blending the segments with rendered content provides a view of an extended reality (XR) environment.
18. The method of any of articles 1-17, wherein the electronic device is a head-mounted device (HMD).
19. A system comprising:
   one or more processors and program instructions that, when executed on the one or more processors, cause the one or more processors to perform any one of the methods of articles 1-18.
20. A non-transitory computer-readable storage medium storing program instructions executable via one or more processors to perform the operations of any one of the methods of articles 1-18.
21. A method comprising:
   at an electronic device:
   obtaining image data comprising frames of images sequentially captured by an image capture device on the electronic device in a physical environment;
   producing blended frames by sequentially processing segments of the frames via a shared programable element comprising a non-fixed instruction set, wherein the shared programmable element is shared amongst multiple processes according to a time-sharing policy, the multiple processes comprising performing one or more visual effects on the segments, blending the segments with rendered content, and one or more additional processes, wherein the time-sharing configuration controls use of the programable element by the multiple processes to ensure performance of the one or more visual effects or blending in accordance with timing constraints associated with display of individual blended frames; and
   displaying the blended frames.
22. The method of articles 21, wherein the shared programable element is a shared graphical processing unit (GPU).
23. The method of article 22, further comprising:
   detecting a condition in which the shared GPU is unable perform the one or more visual effects or blending in accordance with a timing constraint of the timing constraints; and
   based on detecting the condition and the time-sharing policy, altering the one or more additional processes to enable the GPU to perform the one or more visual effects or blending in accordance with the timing constraint.
24. The method of article 23, wherein altering the one or more additional process comprises discontinuing processing of the one or more processes via the shared GPU.
25. The method of any of articles 21-24, wherein the frames are converted to a non-rectilinear format based on identification of areas of the frames at which a user is looking and the one or more visual effects are performed via the programable element based on the non-rectilinear format.
26. The method of any of articles 21-25, wherein the frames are converted to a non-rectilinear format based on identification of areas of the frames at which a user is looking and the blending is performed via the programable element based on the non-rectilinear format.
27. The method of any of articles 21-24, wherein the one or more visual effects and the blending are performed via the programable element based on an original, rectilinear format of the frames.
28. The method of any of articles 21-27 further comprising:
   detecting a condition in which the programmable block is unable perform the one or more visual effects or blending in accordance with a timing constraint of the timing constraints; and
   based on detecting the condition, providing one or more of the frames for display without processing via the programable element.
29. The method of any of articles 21-28, wherein performing the one or more visual effects on the segments involves segment-specific effects in which each effect is based on only information about pixels in a respective segment upon which the respective segment is performed.
30. The method of article 29, wherein the one or more visual effects comprise changing a pixel color.
31. The method of any of articles 21-28, wherein performing the one or more visual effects involves multi-segment effects in which an effect for a first segment is based on information about one or more pixels from a second segment of a same frame that is different than the first segment.
32. The method of article 31, wherein the effect comprises a displacement of frame content from the second segment to the first segment.
33. The method of any of articles 21-28, wherein performing the one or more visual effects involves multi-segment effects in which an effect for a first segment is based on information about one or more pixels from a second segment of a prior frame.
34. The method of any of articles 21-33, wherein the one or more visual effects comprise at least one visual effect that is triggered based on detection of an event, wherein the event is detected based on assessment of at least one of the frames.
35. The method of any of articles 21-34, wherein the one or more visual effects comprise at least one visual effect in a current frame is triggered based analysis of a prior segment of the current frame.
36. The method of any of articles 21-35, wherein the timing constraints correspond to providing live pass-through.
37. The method of any of articles 21-36, wherein blending the segments with rendered content provides a view of an extended reality (XR) environment.
38. The method of any of articles 21-37, wherein the electronic device is a head-mounted device (HMD).
39. A system comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the one or more processors to perform any one of the methods of articles 21-38.
40. A non-transitory computer-readable storage medium storing program instructions executable via one or more processors to perform the operations of any one of the methods of articles 21-38.

## Claims

1. A method comprising:
at an electronic device:
obtaining image data comprising frames of images sequentially captured by an image capture device on the electronic device in a physical environment;
producing blended frames by sequentially processing segments of the frames via a programmable element, each of the segments comprising less than an entire frame of the frames, the programable element comprising a non-fixed instruction set, wherein the processing comprises performing one or more visual effects on the segments and blending the segments with rendered content, wherein the segments are modified with the one or more visual effects and blended with the rendered content in stages that are performed according to timing constraints associated with display of individual blended frames; and
displaying the blended frames.

2. The method of claim 1, wherein the frames are converted to a non-rectilinear format based on identification of areas of the frames at which a user is looking and the one or more visual effects are performed via the programable element based on the non-rectilinear format.

3. The method of any of claims 1-2, wherein the frames are converted to a non-rectilinear format based on identification of areas of the frames at which a user is looking and the blending is performed via the programable element based on the non-rectilinear format.

4. The method of any of claims 1-3, wherein the one or more visual effects and the blending are performed via the programable element based on an original, rectilinear format of the frames.

5. The method of any of claims 1-4 further comprising:
detecting a condition in which the programmable block is unable perform the one or more visual effects or blending in accordance with a timing constraint of the timing constraints; and
based on detecting the condition, providing one or more of the frames for display without processing via the programable element.

6. The method of any of claims 1-5, wherein the programable element is a graphical processing unit (GPU), wherein the GPU is shared amongst multiple processes, the multiple processes comprising processes for the performing of the visual effects, the blending, and additional processes.

7. The method of claim 6, further comprising:
detecting a condition in which the GPU is unable perform the one or more visual effects or blending in accordance with a timing constraint of the timing constraints; and
based on detecting the condition, altering the additional processes to enable the GPU to perform the one or more visual effects or blending in accordance with the timing constraint.

8. The method of any of claims 1-7, wherein performing the one or more visual effects on the segments involves segment-specific effects in which each effect is based on only information about pixels in a respective segment upon which the respective segment is performed, wherein the one or more visual effects comprise changing a pixel color.

9. The method of any of claims 1-8, wherein performing the one or more visual effects involves multi-segment effects in which an effect for a first segment is based on information about one or more pixels from a second segment of a same frame that is different than the first segment, wherein the effect comprises a displacement of frame content from the second segment to the first segment.

10. The method of any of claims 1-8, wherein performing the one or more visual effects involves multi-segment effects in which an effect for a first segment is based on information about one or more pixels from a second segment of a prior frame.

11. The method of any of claims 1-10, wherein the one or more visual effects comprise at least one visual effect that is triggered based on detection of an event, wherein the event is detected based on assessment of at least one of the frames.

12. The method of any of claims 1-11, wherein the one or more visual effects comprise at least one visual effect in a current frame is triggered based analysis of a prior segment of the current frame.

13. The method of any of claims 1-12, wherein the timing constraints correspond to providing live pass-through, wherein blending the segments with rendered content provides a view of an extended reality (XR) environment, and wherein the electronic device is a head-mounted device (HMD).

14. A system comprising:
one or more processors and program instructions that, when executed on the one or more processors, cause the one or more processors to perform any one of the methods of claims 1-13.

15. A non-transitory computer-readable storage medium storing program instructions executable via one or more processors to perform the operations of any one of the methods of claims 1-13.
